# EUROPEAN PATENT SPECIFICATION

(11) **EP 1 787 889 B1**
(45) Date of publication and mention of the grant of the patent: **20.08.2008**
(21) Application number: 06123753.3
(22) Date of filing: 09.11.2006
(51) Int. Cl.: B62D 1/28, G05D 1/02, A01B 69/00, B62D 15/00

(54) **Direction determination utilizing vehicle yaw rate and change in steering position**
Bestimmung der Bewegungsrichtung eines Fahrzeugs unter Verwendung der Giergeschwindigkeit und der Lenkungspositionsänderung
Détermination du sens de déplacement d'un véhicule utilisant la vitesse de lacet et les changements dans la position de la direction

(30) Priority: 22.11.2005 US 284702
(43) Date of publication of application: 23.05.2007
(73) Proprietor: Deere & Company, Moline, IL 61265-8098 (US)
(72) Inventor: Nelson, Frederick W, Waukee, IA 50263 (US)
(74) Representative: Holst, Sönke

(56) References cited:
- EP-A- 1 683 704
- US-A- 5 121 799
- US-A- 6 141 605
- US-B1- 6 577 948

## Description

The present invention relates to automatic steering systems and, more specifically, to determine operational direction of a vehicle from vehicle yaw rate and steering wheel movement.

In order to work properly, an automatic steering system for a vehicle must recognize if the vehicle is operating in a forward mode or a reverse mode. To turn the vehicle a given direction, movement of the steering device during operation of the vehicle in a forward mode typically is the opposite of the movement of the device during operation of the vehicle in reverse. Many presently available integrated automatic steering or tracking systems can determine the vehicle gear selected and the direction of travel. However, some non-integrated steering systems lack a transducer or other attachment that can readily communicate the actual vehicle operational direction to the controller. An example of a non-integrated system is a retrofittable steering control with a drive mechanism that attaches to a steering column or contacts an existing steering wheel for automatic steering control such as described in EP 1 683 704 A. Even in systems wherein the selected gear and direction is readily determinable, further verification of the direction is often desired.

EP 1 475 609 A describes an automatic steering system according to the preamble of claims 1 and 10. Position data received by a GPS receiver are corrected with terrain compensation data (roll angle and yaw data) as the vehicle moves over uneven terrain.

US 6 577 948 B describes an algorithm for determining the travel direction of an automobile. The algorithm receives data regarding the direction of the rotation of the steering wheel in combination with a reading of the yaw rate and computes the direction of travel, and thus determines whether the automobile drives forward or rearward. The yaw rate is derived from the wheel speeds of all four wheels or from a lateral acceleration sensor. The direction of travel is used in a stability control system.

It is an object of the present invention to provide an improved system and method for determining vehicle direction. It is a further object to provide such a system and method which overcomes most or all of the aforementioned problems. It is another object to provide an improved system and method for determining vehicle direction which can operate independently of gear select switches and which is particularly useful with retrofittable steering controls.

This object is achieved with the subject matter of claims 1 and 10, whereby the dependent claims recite further advantageous embodiments.

A steering system constructed in accordance with the present invention compares the rate of change of the yaw rate and the rate of change of the steering wheel or steering control position. If the steering wheel is turned to the right and the vehicle is in a forward gear, then the vehicle yaw rate will go to the right. If the steering wheel is turned to the right and the vehicle is in reverse gear, the vehicle yaw rate will go to the left. Upon vehicle start up, the direction is set to unknown. Once vehicle speed, steering wheel turn and vehicle yaw reach preselected thresholds, a determination of the vehicle direction can be made by comparing the sign of the steering wheel angle change and the sign of the yaw rate change. If the signs match, then the vehicle is in a forward gear. If the signs do not match, then the vehicle is in reverse. The yaw rate is derived from a terrain compensation module that also serves to correct GPS data used by the steering system for roll angle and yaw as the vehicle moves over uneven terrain.

As a further enhancement to this method, the GPS course can be monitored after the direction has been determined to provide a more rapid response to changing direction. A change in direction is indicated when the vehicle speed transitions to zero and GPS course change approaches 180 degrees. Even when the direction is known, the steering wheel angle and yaw rate changes can be monitored to verify that the direction is correct.

The system provides a direction indication without need for an input from the vehicle transmission or shift control. Therefore, a direction determination input for an automatic steering system, even a system which is retrofitted to an existing vehicle, is easily attainable.

These and other objects, features and advantages of the present invention will become apparent from the description which follows taken with the drawings, in which:
Fig. 1 is a schematic representation of steering structure for converting a manual steering system to an automatic system, the system including direction determination structure;

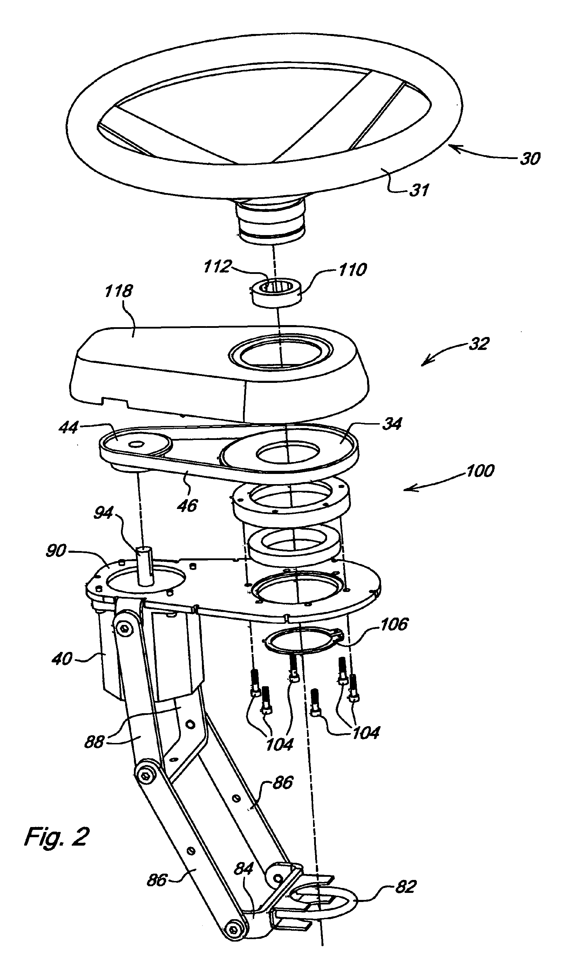

Fig. 2 is an exploded view of a portion of the steering structure of Fig. 1;
Fig. 3 is a flow chart illustrating a method for determining vehicle direction;
Fig. 4 is a flow chart illustrating a method for continually monitoring the vehicle direction once an initial direction determination has been made.

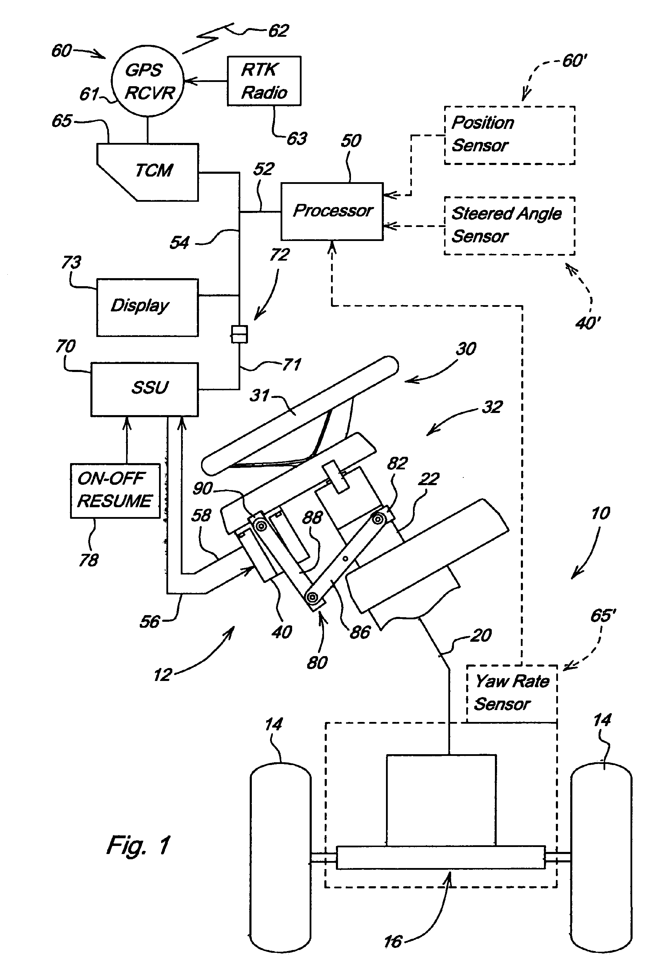

Referring now to Fig. 1, therein is shown an off-road vehicle 10 such as a tractor or utility vehicle having an operator station 12 supported for movement over the ground by steerable wheels 14. The wheels 14 are connected to a conventional steering mechanism or control 16 which includes a rotatable steering shaft 20 supported within a steering column 22 which projects upwardly at the operator station 12. A steering wheel 30 with a hand grip portion 31 is supported at the upper end of the shaft 20 for manual steering operation by the operator.

As shown, the steering wheel 30 is part of conversion structure indicated generally at 32 for providing an automatic steering function on a vehicle normally equipped with manual steering only. Alternatively, the original steering wheel of the vehicle may be mounted on the conversion structure 32. The conversion structure is fully described in EP 1 683 704 A.

Pulley structure 34 is connected for rotation with the shaft 20 about the shaft axis at a location adjacent the connection of the steering wheel 30 with the shaft 20. A motor 40 is supported from the column 22. Pulley structure 44 drivingly connects the motor 40 to the pulley structure 34. As shown, the pulley structures 34 and 44 are pulleys connected by a chain, conventional drive belt or timing belt arrangement 46. However, other types of drives such as gear drives may also be used. For example, a motor may be mounted on the end of the steering shaft 20 to provide direct drive to the shaft 20 at a location offset from hand grip portion 31.

A processor 50 is located on the vehicle 10 and includes a control output 52 connected through a CAN harness 54 to an input 56 of the motor 40. A position feedback output 58 on the motor 40 is connected to an input of the processor 50. As shown, the motor 40 is an electric stepper motor, and the feedback device is an encoder located on the motor 40 and providing signal over a feedback line 58 indicative of the number of steps the motor 40 has moved. The motor 40 remains drivingly connected to the steering shaft 20 in both a manual steering mode and an automatic steering mode so that the encoder is capable of providing a shaft position signal to the processor 50 in both modes.

The processor 50 is connected to position sensor structure indicated generally at 60 in Fig. 1, such as a conventional global positioning system (GPS) with a receiver 61 that receives signals 62 from one or more remote locations. Additional correction inputs such as a RTK ground based differential correction input may be provided from an RTK radio 63, and a terrain compensation input may be provided from a terrain compensation module (TCM) 65. The TCM 65 corrects GPS data for roll angle and yaw as the vehicle 10 moves over uneven terrain and provides a yaw rate signal utilized in the direction determination feature discussed in detail below.

The system 60 is connected through CAN 54 to an input of the processor 50. A steering system unit (SSU) 70 is connected through a CAN harness 71 and a system connector 72 to the CAN harness 54 and to a system display 73. The SSU 70 receives control information from the processor 50 and position feedback information via line 58 from the encoder on the motor 50. An on-off and resume switch 78 is connected to the SSU 70.

The processor 50 determines the position of the vehicle and compares the position to a desired position and intended path of the vehicle. An error signal is generated, and the motor 40 is activated to move a preselected number of steps depending on the error signal. Detection devices, such as a ground speed detector and lateral velocity, provide signals utilized by the processor 50 to increase the accuracy of the automatic steering system.

If the number of steps reported by the motor encoder to the processor 50 outside a range expected by the processor, the system assumes the operator wants control and turns off power to the stepper motor 40. Also, if the encoder determines there is steering wheel movement when no change in position was requested by the processor, the power to the motor 40 is interrupted.

An adapter bracket 80 connects the motor 40 to the steering column 22 or other convenient location adjacent the upper end of the steering shaft 20. The bracket 80 includes a U-clamp 82 secured to the column 22 and having an arm support 84 pivotally connected to ends of a pair of arms 86. A second pair of arms 88 is pivotally connected to opposite ends of the arms 86 and supports a motor mount 90. The stepper motor 40 is bolted to the mount 90 and includes a drive shaft 94 which receives the pulley 44. The pulley structure 34 is supported for rotation on the mount 90 by insert and bearing structure 100 secured by bolts 104 and snap ring 106. A replaceable insert 110 is captured within the bearing structure 100 for rotation together with the upper end of the shaft 20 and the pulley 34. The insert 110 has an inner configuration 112 adapted to be received on the splined or keyed end of the steering shaft 20 for the particular vehicle being converted for automatic steering. A cover 118 is secured to the mount 90 and generally encloses the pulley structures 34 and 44. The structure 32 can be easily positioned by selectively locating the clamp 82 and pivoting the arms 86 and 88. Once the structure 32 is properly positioned with the insert 110 over the steering shaft 20, the linkage 80 can be anchored to a fixed surface to prevent rotation of the motor assembly.

The GPS system 60 provides speed, course, and timing information. The processor 50 uses the speed information to determine when the vehicle 10 has transitioned between moving and stopped states. The course information is used to continually monitor the direction once an initial direction determination has been made. Alternatively, another type of position sensor system indicated by the broken lines at 60' in Fig. 1 can be used to provide the speed, course and timing information.

The encoder on the motor 40 provides a steered angle signal via line 58, that is used to measure vehicle steered angle. Although this signal is shown as generated from the encoder on the motor 40, other types of conventional signal generating devices indicated at 40' can be used to measure the steering wheel angle, an actual steered wheel angle, or an articulation angle for a four-wheel drive vehicle 10 to provide the steered angle signal.

A yaw rate signal is provided to the processor 50 by the TCM 65. Alternatively, a yaw rate sensor or gyro such as shown by the broken lines at 65' associated with the vehicle 10 may be connected to the processor 50. Yaw rate signals may be generated by monitoring the rate of change of the GPS course, or by measuring the vehicle attitude using two GPS receivers. The processor 50 performs the necessary comparisons and calculations as described below. As shown in Fig. 1, the processor 50 comprises a steering controller. However, other types of processors, such as the processor in the GPS system 60 or in the display 73.

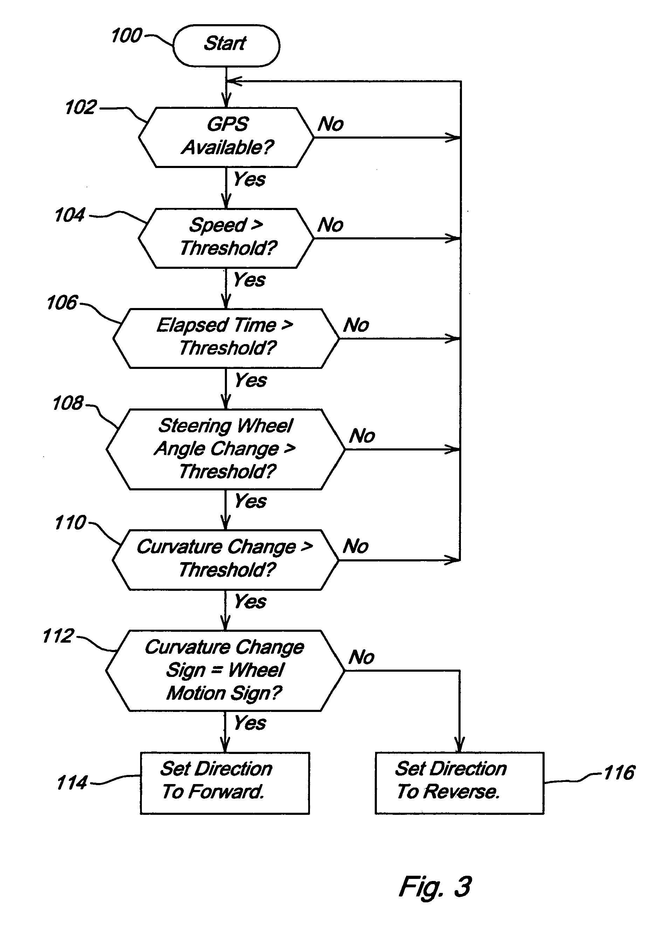

Upon initiation of the routine at 100 (Fig. 3), the processor 50 checks the status information sent by the GPS 60 to verify that the GPS is available at step 102. If GPS is available at 102, then the processor 50 obtains vehicle speed from the GPS and compares it to a threshold at 104. Speed can also be obtained from another source such as the wheel speed, radar speed, or other vehicle-indicated speed. The step 104 is performed to verify that the vehicle speed is high enough to guarantee that the speed reading is not merely noise and that the vehicle is actually moving. For example, the system shown uses a speed of one mile per hour as the threshold speed.

If the speed is greater than the threshold at 104, the processor then obtains the rate of change of the steering wheel angle or steering control and yaw rate over a period of time at 106 and 108. The system as shown, for example, has an elapsed time threshold of approximately three seconds. The time is obtained from the GPS signal, but timing information can also be obtained from an internal timer on the processor 50.

At the step 108, the processor 50 compares the steering wheel angle or steering control change over the time interval of the step 106 to a threshold to determine if there has been enough control motion to cause a change in the yaw rate. By way of example, the current threshold for steering wheel angle is 45°. If the control angle is greater than the prescribed threshold, the processor 50 compares path curvature change over the time interval to a threshold at 110 to determine if the steering radius has changed. Curvature is calculated using the yaw rate and the ground speed. The sign of the path curvature is compared to the sign of the control motion at step 112. If curvature and control motion signs are the same, then the direction is set to forward in the processor 50 at 114. If the curvature and wheel motion signs are not the same, then the direction is set to reverse at 116.

The process can be repeated to verify that the direction is correct. If a determination is made during operation that conflicts with the currently stored direction, then the series of questions will be repeated once more to verify that field conditions have not caused a momentary false reading.

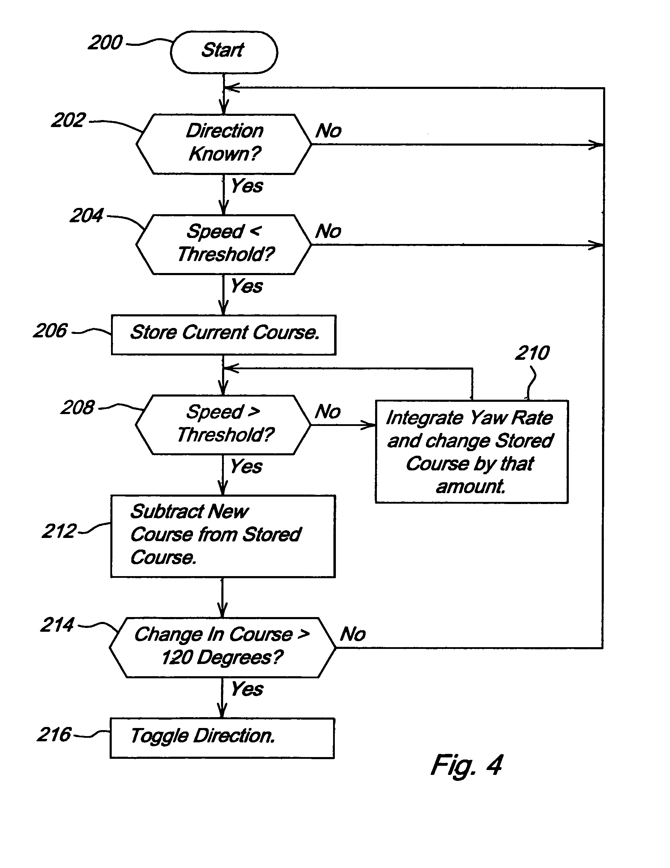

Referring to Fig. 4, therein illustrates a method for continually monitoring the direction once a direction determination has been made. This extension of the method described directly above provides fast response to changing direction. A change in direction is indicated when the vehicle speed transitions to zero and the GPS course changes more than a preselected number of degrees.

The routine is begun at 200, and once a direction has been established at 202, the processor 50 compares the speed of the vehicle 10 to a threshold at 204 to determine if the vehicle has come to a stop. The direction may change from forward to reverse, or from reverse to forward, when the vehicle 10 has come to a stop. Once it is determined at 204 that the vehicle has come to a stop, the vehicle course when the transition to zero speed occurred is stored in the processor 50 at 206. The vehicle speed is then monitored and compared to a threshold at step 208 to determine when the vehicle starts to move again. The threshold of the current system, for example, is 0.5 mph. If the speed is not greater than the threshold, the integral of the yaw rate is calculated at 210 and the stored course is changed by that amount. The integration is necessary because the vehicle may be rotating while traveling below the speed threshold. Such movement is possible, for example, on track tractors which can rotate without moving forward.

Once the speed becomes greater than the threshold, then the new course is subtracted from the stored course at 212. If the difference is greater than a preselected angle, which for example is 120°, then a reversal of direction is signaled at 214, and the direction is toggled at 216 in the processor. If the difference is less than this threshold, then the direction has not changed, and the system returns to the start and monitors for another transition to zero speed.

## Claims

1. A method of automatic steering a vehicle (10) comprising the following steps:
receiving global positioning system (GPS) signals (62) from one or more remote locations with a receiver (61);
correcting the GPS data for roll angle and yaw as the vehicle (10) moves over uneven terrain using terrain compensation input data from a terrain compensation module (65);
providing the corrected GPS data to a control algorithm of an automatic steering system (60) having a movable steering control mechanism (16), the steering control mechanism (16) movable in first and second control directions for turning the vehicle (10) to the left and to the right, respectively, when the vehicle (10) is moving in a forward direction;
**characterized by** providing an indication of the direction of movement of the vehicle (10) to the control algorithm of the automatic steering system (60) by:
providing the yaw rate signal indicative of vehicle (10) turns to the left and right from the terrain compensation module (65);
providing a steering control direction signal indicative of the movement of the steering control mechanism (16) in the first and second control directions;
providing a forward direction indication when either the yaw rate signal indicates a vehicle turn to the left when the steering control direction signal indicates movement in the first control direction, or the yaw rate signal indicates a vehicle turn to the right when the steering control direction signal indicates movement in the second control direction; and
providing a reverse direction indication when either the yaw rate signal indicates a vehicle turn to the right when the steering control direction signal indicates movement in the first control direction, or the yaw rate signal indicates a vehicle turn to the left when the steering control direction signal indicates movement in the second control direction.

2. The method according to claim 1 wherein the step of providing a steering control direction signal comprises retrofitting a vehicle steering wheel column (22) with a steering motor (40) having an encoder providing an output signal in dependence on the rotation of a steering wheel (30).

3. The method according to claim 1 including the step of providing a vehicle speed signal and verifying that the vehicle (10) is moving above a preselected speed prior to providing the forward or reverse direction indication.

4. The method according to claim 1 including the step of determining from the steering control direction signal if the movement of the steering control (22) is above a threshold value prior to providing the forward or reverse direction indication.

5. The method according to claim 1 including the steps of determining vehicle path curvature utilizing the yaw rate signal and changing the forward or reverse direction indication only if the curvature is above a threshold value.

6. The method according to claim 3 including the step of calculating the rate of change of yaw rate and steering control movement over a preselected period of time.

7. The method according to claim 1 including the steps of continually monitoring vehicle direction after the forward or reversed indication is provided, detecting a vehicle stop condition, and determining if the vehicle is rotating while traveling below a preselected threshold speed.

8. The method according to claim 7 further including storing vehicle course when the vehicle stop condition is detected, and if the vehicle is traveling at or above the preselected threshold speed, determining difference between the stored vehicle course and a new course.

9. The method according to claim 8 including the step of toggling the direction indication if the difference between the stored vehicle course and the new course is greater than a preselected angle.

10. An automatic steering system (60) comprising:
a receiver (61) for receiving global positioning system (GPS) signals (62) from one or more remote locations;
a terrain compensation module (65) for providing terrain compensation input data for correcting the GPS data for roll angle and yaw as the vehicle (10) moves over uneven terrain;
an automatic steering system (60) having a movable steering control mechanism (16), the steering control mechanism (16) movable in first and second control directions for turning the vehicle (10) to the left and to the right, respectively, when the vehicle (10) is moving in a forward direction, the automatic steering system (60) comprising a processor (50) operable to run a control algorithm receiving the corrected GPS data;
**characterized in that** the processor (50) is operable to provide an indication of the direction of movement of the vehicle (10) to the control algorithm by:
receiving the yaw rate signal indicative of vehicle (10) turns to the left and right from the terrain compensation module (65);
receiving a steering control direction signal indicative of the movement of the steering control mechanism (16) in the first and second control directions;
providing a forward direction indication when either the yaw rate signal indicates a vehicle turn to the left when the steering control direction signal indicates movement in the first control direction, or the yaw rate signal indicates a vehicle turn to the right when the steering control direction signal indicates movement in the second control direction; and
providing a reverse direction indication when either the yaw rate signal indicates a vehicle turn to the right when the steering control direction signal indicates movement in the first control direction, or the yaw rate signal indicates a vehicle turn to the left when the steering control direction signal indicates movement in the second control direction.

## Patentansprüche

1. Verfahren zum automatischen Lenken eines Fahrzeugs (10), die folgenden Schritte umfassend:
Empfangen von GPS-(globales Positionierungs-system)-Signalen (62) von einem oder mehreren entfernten Orten mit einem Empfänger (61);
Korrigieren der GPS-Daten für Rollwinkel und Gier, wenn sich das Fahrzeug (10) über unebenes Gelände bewegt, unter Verwendung von Geländekompensationseingangsdaten von einem Geländekompensationsmodul (65);
Bereitstellen der korrigierten GPS-Daten an einem Steueralgorithmus eines automatischen Lenksystems (60) mit einem beweglichen Lenksteuermechanismus (16), wobei der Lenksteuermechanismus (16) in einer ersten und zweiten Steuerrichtung bewegt werden kann, um das Fahrzeug (10) nach links bzw. nach rechts zu wenden, wenn sich das Fahrzeug (10) in einer Vorwärtsrichtung bewegt;
**gekennzeichnet durch** Bereitstellen einer Anzeige der Bewegungsrichtung des Fahrzeugs (10) an den Steueralgorithmus des automatischen Lenksystems (60) **durch**:
Bereitstellen des Gierratensignals, das Kurven des Fahrzeugs (10) nach rechts und links anzeigt, von dem Geländekompensationsmodul (65);
Bereitstellen eines Lenksteuerrichtungssignals, das die Bewegung des Lenksteuermechanismus (16) in der ersten und zweiten Steuerrichtung anzeigt;
Bereitstellen einer Vorwärtsrichtungsanzeige, wenn entweder das Gierratensignal eine Fahrzeugkurve nach links anzeigt, wenn das Lenksteuerrichtungssignal eine Bewegung in der ersten Steuerrichtung anzeigt, oder das Gierratensignal eine Fahrzeugkurve nach rechts anzeigt, wenn das Lenksteuerrichtungssignal eine Bewegung in der zweiten Steuerrichtung anzeigt; und
Bereitstellen einer Rückwärtsrichtungsanzeige, wenn entweder das Gierratensignal eine Fahrzeugkurve nach rechts anzeigt, wenn das Lenksteuerrichtungssignal eine Bewegung in der ersten Steuerrichtung anzeigt, oder das Gierratensignal eine Fahrzeugkurve nach links anzeigt, wenn das Lenksteuerrichtungssignal eine Bewegung in der zweiten Steuerrichtung anzeigt.

2. Verfahren nach Anspruch 1, wobei der Schritt des Bereitstellens eines Lenksteuerrichtungssignals das Nachrüsten einer Fahrzeuglenkradsäule (22) mit einem Lenkmotor (40), der einen Codierer aufweist, umfaßt, der ein Ausgangssignal in Abhängigkeit von der Drehung eines Lenkrads (30) bereitstellt.

3. Verfahren nach Anspruch 1 einschließlich des Schritts des Bereitstellens eines Fahrzeuggeschwindigkeitssignals und Verifizieren, daß sich das Fahrzeug (10) vor dem Bereitstellen der Vorwärts- oder Rückwärtsrichtungsanzeige über einer vorgewählten Geschwindigkeit bewegt.

4. Verfahren nach Anspruch 1 einschließlich des Schritts des Bestimmens aus dem Lenksteuerrichtungssignal, ob die Bewegung der Lenksteuerung (22) vor dem Bereitstellen der Vorwärts- oder Rückwärtsrichtungsanzeige über einem Schwellwert liegt.

5. Verfahren nach Anspruch 1 einschließlich der Schritte des Bestimmens einer Fahrzeugwegkrümmung unter Nutzung des Gierratensignals und Ändern der Vorwärts- oder Rückwärtsrichtungsanzeige nur, wenn die Krümmung über einem Schwellwert liegt.

6. Verfahren nach Anspruch 3 einschließlich der Schritte des Berechnens der Änderungsrate der Gierrate und Lenksteuerbewegung über eine vorgewählte Zeitperiode.

7. Verfahren nach Anspruch 1 einschließlich der Schritte des ständigen Überwachens der Fahrzeugrichtung nach dem Bereitstellen der Vorwärts- oder Rückwärtsanzeige, Detektieren eines Fahrzeugstoppzustands und Bestimmen, ob sich das Fahrzeug dreht, während es unter einer vorgewählten Schwellwertgeschwindigkeit fährt.

8. Verfahren nach Anspruch 7, ferner beinhaltend das Speichern eines Fahrzeugkurses, wenn der Fahrzeugstoppzustand detektiert ist, und wenn das Fahrzeug mit oder über der vorgewählten Schwellwertgeschwindigkeit fährt, und Bestimmen einer Differenz zwischen dem gespeicherten Fahrzeugkurs und einem neuen Kurs.

9. Verfahren nach Anspruch 8, einschließlich des Schritts des Umschaltens der Richtungsanzeige, wenn die Differenz zwischen dem gespeicherten Fahrzeugkurs und dem neuen Kurs größer als ein vorgewählter Winkel ist.

10. Automatisches Lenksystem (60), umfassend:
einen Empfänger (61) zum Empfangen von GPS-(globales Positionierungssystem)-Signalen (62) von einem oder mehreren entfernten Orten;
ein Geländekompensationsmodul (65) zum Bereitstellen von Geländekompensationseingangsdaten zum Korrigieren der GPS-Daten für Rollwinkel und Gier, wenn sich das Fahrzeug (10) über unebenes Gelände bewegt;
ein automatisches Lenksystems (60) mit einem beweglichen Lenksteuermechanismus (16), wobei der Lenksteuermechanismus (16) in einer ersten und
zweiten Steuerrichtung bewegt werden kann, um das Fahrzeug (10) nach links bzw. nach rechts zu wenden, wenn sich das Fahrzeug (10) in einer Vorwärtsrichtung bewegt, wobei das automatische Lenksystem (60) einen Prozessor (50) umfaßt, der betätigt werden kann, einen die korrigierten GPS-Daten empfangenen Steueralgorithmus abzuarbeiten;
**dadurch gekennzeichnet, daß** der Prozessor (50) betätigt werden kann, eine Anzeige der Bewegungsrichtung des Fahrzeugs (10) an den Steueralgorithmus zu liefern durch:
Empfangen des Gierratensignals, das Kurven des Fahrzeugs (10) nach rechts und links anzeigt, von dem Geländekompensationsmodul (65);
Empfangen eines Lenksteuerrichtungssignals, das die Bewegung des Lenksteuermechanismus (16) in der ersten und zweiten Steuerrichtung anzeigt;
Bereitstellen einer Vorwärtsrichtungsanzeige, wenn entweder das Gierratensignal eine Fahrzeugkurve nach links anzeigt, wenn das Lenksteuerrichtungssignal eine Bewegung in der ersten Steuerrichtung anzeigt, oder das Gierratensignal eine Fahrzeugkurve nach rechts anzeigt, wenn das Lenksteuerrichtungssignal eine Bewegung in der zweiten Steuerrichtung anzeigt; und
Bereitstellen einer Rückwärtsrichtungsanzeige, wenn entweder das Gierratensignal eine Fahrzeugkurve nach rechts anzeigt, wenn das Lenksteuerrichtungssignal eine Bewegung in der ersten Steuerrichtung anzeigt, oder das Gierratensignal eine Fahrzeugkurve nach links anzeigt, wenn das Lenksteuerrichtungssignal eine Bewegung in der zweiten Steuerrichtung anzeigt.

## Revendications

1. Procédé de direction automatique d'un véhicule (10) comportant les étapes suivantes :
réception de signaux (62) d'un système de localisation planétaire (GPS) provenant d'un ou de plusieurs emplacements distants à l'aide d'un récepteur (61) ;
correction des données GPS pour tenir compte de l'angle de roulis et du lacet tandis que le véhicule (10) évolue sur un terrain irrégulier en utilisant des données d'entrée de compensation de terrain provenant d'un module (65) de compensation de terrain ;
mise des données GPS corrigées à la disposition d'un algorithme de commande d'un système (60) de direction automatique muni d'un mécanisme mobile (16) de commande de direction, le mécanisme (16) de commande de direction étant mobile dans un premier et un deuxième sens de commande afin de faire tourner le véhicule (10) vers la gauche et vers la droite, respectivement, lorsque le véhicule (10) avance dans un sens avant ;
**caractérisé en ce qu'**il fournit une indication du sens de mouvement du véhicule (10) à l'algorithme de commande du système (60) de direction automatique :
en fournissant le signal de vitesse de lacet indiquant les virages du véhicule (10) à gauche et à droite à partir du module (65) de compensation de terrain ;
en fournissant un signal de sens de commande de la direction indiquant le mouvement du mécanisme (16) de commande de direction dans le premier et le deuxième sens de commande ;
en fournissant une indication de sens avant, soit lorsque le signal de vitesse de lacet indique un virage du véhicule à gauche tandis que le signal de sens de commande de la direction indique un mouvement dans le premier sens de commande, soit lorsque le signal de vitesse de lacet indique un virage du véhicule à droite tandis que le signal de sens de commande de la direction indique un mouvement dans le deuxième sens de commande, et
en fournissant une indication de sens arrière, soit lorsque le signal de vitesse de lacet indique un virage du véhicule à droite tandis que le signal de sens de commande de la direction indique un mouvement dans le premier sens de commande, soit lorsque le signal de vitesse de lacet indique un virage du véhicule à gauche tandis que le signal de sens de commande de la direction indique un mouvement dans le deuxième sens de commande.

2. Procédé selon la revendication 1, l'étape consistant à fournir un signal de sens de commande de la direction comportant le rééquipement d'une colonne (22) de direction du véhicule avec un moteur (40) de direction muni d'un codeur fournissant un signal de sortie en fonction de la rotation d'un volant (30) de direction.

3. Procédé selon la revendication 1 comportant l'étape consistant à fournir un signal de vitesse du véhicule et à confirmer que le véhicule (10) évolue au-dessus d'une vitesse présélectionnée avant de fournir l'indication de sens avant ou arrière.

4. Procédé selon la revendication 1, comprenant l'étape consistant à déterminer, à partir du signal de sens de commande de la direction, si le mouvement de la commande (22) de direction est supérieur à une valeur seuil avant de fournir l'indication de sens avant ou arrière.

5. Procédé selon la revendication 1, comprenant les étapes consistant à déterminer la courbure de la trajectoire du véhicule en utilisant le signal de vitesse de lacet et à ne modifier l'indication de sens avant ou arrière que si la courbure est supérieure à une valeur seuil.

6. Procédé selon la revendication 3, comprenant l'étape consistant à calculer le taux de variation de la vitesse de lacet et du mouvement de la commande de direction sur un laps de temps présélectionné.

7. Procédé selon la revendication 1, comprenant les étapes consistant à surveiller de façon continue le sens du véhicule après que l'indication de sens avant ou arrière a été fournie, à détecter un état d'arrêt du véhicule et à déterminer si le véhicule tourne tandis qu'il avance au-dessous d'une vitesse seuil présélectionnée.

8. Procédé selon la revendication 7, comprenant en outre l'étape consistant à enregistrer le parcours du véhicule lorsque l'état d'arrêt du véhicule est détecté et, si le véhicule avance à une vitesse supérieure ou égale au seuil présélectionné, à déterminer une différence entre le parcours enregistré du véhicule et un nouveau parcours.

9. Procédé selon la revendication 8, comprenant l'étape consistant à basculer l'indication de sens si la différence entre le parcours enregistré du véhicule et le nouveau parcours est supérieure à un angle présélectionné.

10. Système (60) de direction automatique comportant :
un récepteur (61) destiné à recevoir des signaux (62) d'un système de localisation planétaire (GPS) provenant d'un ou de plusieurs emplacements distants ;
un module (65) de compensation de terrain destiné à fournir des données d'entrée de compensation de terrain afin de corriger des données GPS pour tenir compte de l'angle de roulis et du lacet tandis que le véhicule (10) évolue sur un terrain irrégulier ;
un système (60) de direction automatique muni d'un mécanisme mobile (16) de commande de direction, le mécanisme (16) de commande de direction étant mobile dans un premier et un deuxième sens de commande afin de faire tourner le véhicule (10) vers la gauche et vers la droite, respectivement, lorsque le véhicule (10) avance dans un sens avant, le système (60) de direction automatique comportant un processeur (50) exploitable pour exécuter un algorithme de commande recevant les données GPS corrigées ;
**caractérisé en ce que** le processeur (50) est exploitable pour fournir une indication du sens de mouvement du véhicule (10) à l'algorithme de commande :
en recevant le signal de vitesse de lacet indiquant les virages du véhicule (10) à gauche et à droite à partir du module (65) de compensation de terrain ;
en recevant un signal de sens de commande de la direction indiquant le mouvement du mécanisme (16) de commande de direction dans le premier et le deuxième sens de commande ;
en fournissant une indication de sens avant, soit lorsque le signal de vitesse de lacet indique un virage du véhicule à gauche tandis que le signal de sens de commande de la direction indique un mouvement dans le premier sens de commande, soit lorsque le signal de vitesse de lacet indique un virage du véhicule à droite tandis que le signal de sens de commande de la direction indique un mouvement dans le deuxième sens de commande, et
en fournissant une indication de sens arrière, soit lorsque le signal de vitesse de lacet indique un virage du véhicule à droite tandis que le signal de sens de commande de la direction indique un mouvement dans le premier sens de commande, soit lorsque le signal de vitesse de lacet indique un virage du véhicule à gauche tandis que le signal de sens de commande de la direction indique un mouvement dans le deuxième sens de commande.
